# EUROPEAN PATENT SPECIFICATION

(11) **EP 0 880 884 B1**
(45) Date of publication and mention of the grant of the patent: **23.04.2003**
(21) Application number: 98610014.7
(22) Date of filing: 28.05.1998
(51) Int. Cl.: A01D 34/76, A01B 73/04

(54) **A lift-suspended agricultural implement**
Aufgehängtes landwirtschaftliche Gerät
Outil agricole suspendu

(30) Priority: 29.05.1997 DK 61897
(43) Date of publication of application: 02.12.1998
(73) Proprietor: JF-FABRIKEN - J. FREUDENDAHL A/S, DK-6400 Sonderborg (DK)
(72) Inventor: Freudendahl, Jorn, 6400 Sonderborg (DK); Nielsen, Harald Raun, 6470 Sydals (DK)
(74) Representative: Jorgensen, Bjorn Barker

(56) References cited:
- EP-A- 0 422 721
- EP-A- 0 734 645
- WO-A-97/10699
- DE-A- 1 582 356
- DE-A- 2 527 133

## Description

The present invention relates to a lift-suspended agricultural mower such as a disc or drum mower, comprising a carrier frame adapted to be connected with the three-point suspension lift of a tractor, a carrier arm connected with the carrier frame, in which carrier arm a working part is pivotally suspended in a point close to a vertical plane, which during operation extends substantially in the travelling direction of the mower and contains the centre of the gravity of the working part, and in which a telescopic cardan shaft connects an output shaft on the carrier frame with an input shaft on the working part. The carrier arm may comprise a joint, the axis of which, when the mower is in its working position, extends substantially in the travelling direction of the mower, and which carrier arm comprises a power means for moving the carrier arm in the joint, whereby the working part of the mower is raised or lowered.

A mower of this type is for instance known from EP-A-0 734 645. When the working part is raised either by means of the lift of the tractor or by means of said power means, the working part may perform pendulum swings, and this entails the risk that the telescopic cardan shaft will be telescoped to a length, which exceeds the maximum allowable length of the shaft in question in consideration of the smallest required overlap between the two halves of the shaft. It is from said publication known to provide a tension spring between the working part and the carrier arm in order to draw the end of the working part, which is closest to the tractor, towards the carrier arm, whereby said risk is counteracted. This measure is, however, not always sufficient.

The object of the present invention is to eliminate said risk.

The object is met by means of a mower of the type mentioned by way of introduction, which is characterized by a tow member, which is not thrust transmitting, for defining the distance between said output shaft and the input shaft. In this way an upper limit is set for the extension of the cardan shaft without impediment of the pendulum swing of the working part in the raised position or tilting in view of adaptation to the ground.

The tow member is preferably inextensible beyond a definite, preferably adjustable length.

Moreover, the tow member is preferably fastened to the carrier frame and the working part close to the output shaft and the input shaft, respectively.

The tow member may suitably comprise a cord, a wire, a chain, a telescopic rod or the like.

EP-A-0 422 721 discloses a soil cultivating and sowing implement having working parts or units depending from and movable about horizontal shafts within limits set by respective rods each arranged at one end with play at a carrier beam carrying the respective horizontal shaft, said rods being at their other ends provided with a transverse shaft movable in a slot in the supporting part of the respective working unit.

The invention will now be explained in detail in the following by means of an example of an embodiment with reference to the schematic drawing, in which
Fig. 1 shows a lift-suspended mower seen from the rear in working position, and
Fig. 2 the mower according to Fig. 1 in a slightly raised position.

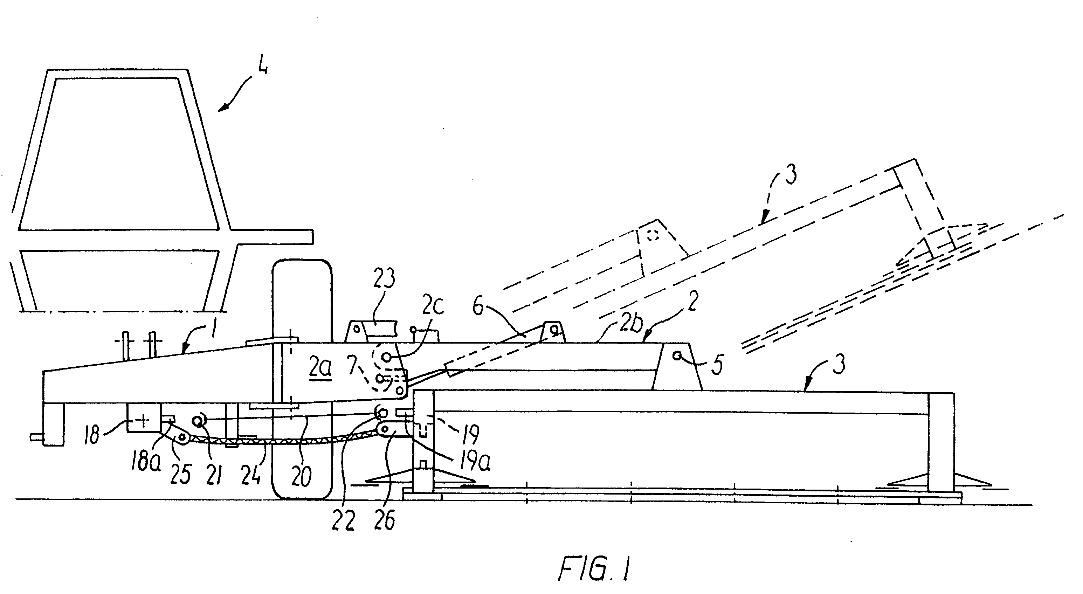

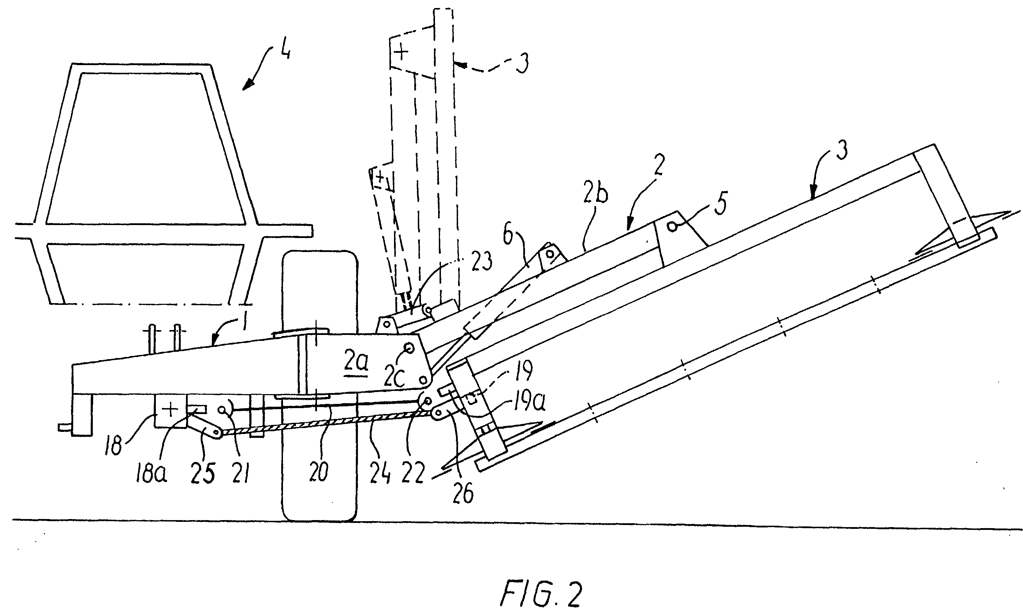

Figs 1 and 2 show a mower, the working part 3 of which is pivotally mounted on an extended carrier arm 2, which carrier arm 2 consists of an exterior member 2b and an interior member 2a which are mutually connected in a pivot joint 2c. The interior member 2a of the carrier arm is pivotally connected with a carrier frame 1, which is mounted in the lift of a tractor 4. For transport the working part 3 is moved towards a substantially vertical transport position (indicated by dotted lines in Fig. 2) by means of a hydraulic thrust cylinder 6, one end of which is mounted on the exterior member 2b of the carrier arm 2, and the other end of which is mounted on the interior member 2a of the carrier arm 2. The working part 3 is pivotally suspended close to its (from a gravitational point of view) centre plane about an axis 5.

The carrier frame 1 is provided with a mitre gear 18 which is connected with the power take off shaft (not shown) of the tractor 4 and at its output shaft 18a is connected with the input shaft 19a of a mitre gear 19 on the working part 3 by means of a telescopic cardan shaft 20 with cardan joints 21 and 22.

The mower comprises as described in detail in EP-A-0 734 645 swingable latches 7 and 23 for limiting the movement of the carrier arm in the joint 2c. Thus, the latch 23 defines the position indicated by a dotted line in Fig. 1 and the slightly raised position shown in Fig. 2, which is used for turns in the field during work.

In the slightly raised position the working part 3 can make pendulum swings about the axis 5, but in consideration of the telescopic cardan shaft 20 and its maximum allowable length, the working part 3 cannot be allowed to turn anti-clockwise about the axis 5 relative to the angular position shown in Fig. 2. A tow member in the shape of a cord 24 has therefore been provided according to the invention, said cord being fastened to the carrier frame 1 on an arm 25 near the output shaft 18a and to the working part 3 near the input shaft 19a on an arm 26.

The cord 24 is substantially not extendable and therefore defines the maximum length of the cardan shaft 20. At the same time the cord 24 is flexible, which makes it adaptable to a smaller distance between the arms 25, 26 corresponding to a smaller length of the cardan shaft 20 (Fig. 1). The flexibility 24 of the cord, moreover, allows other relative turnings between the carrier frame 1 and the working part 3. The length of the cord 24 is adjustable.

It goes without saying that other tow members than a cord may be used, for instance a chain, a wire, a telescopic rod, etc. The requirement to the tow member is only that it is to limit the maximum extension of the cardan shaft 20 without impeding the desired movability of the working part.

## Claims

1. A lift-suspended agricultural mower such as a disc or drum mower, comprising a carrier frame (1) adapted to be connected with the three-point suspension lift of a tractor, a carrier arm (2) connected with the carrier frame (1), in which carrier arm a working part (3) is pivotally suspended in a point (5) close to a vertical plane, which during operation extends substantially in the travelling direction of the mower and contains the centre of the gravity of the working part, and in which a telescopic cardan shaft (20) connects an output shaft (18a) on the carrier frame (1) with a input shaft (19a) on the working part (3), **characterized by** a tow member (24), which is not thrust transmitting, for defining the distance between said output shaft (18a) and the input shaft (19a).

2. A lift-suspended agricultural mower according to claim 1, **characterized in that** the tow member (24) cannot be extended beyond a definite, preferably adjustable length.

3. A lift-suspended agricultural mower according to claim 1 or 2, **characterized in that** the tow member (24) is fastened to the carrier frame (1) and the working part (3) close to the output shaft (18a) and the input shaft (19a), respectively.

4. A lift-suspended agricultural mower according to claims 1-3, **characterized in that** the tow member (24) comprises a cord, a wire, a chain, a telescopic rod or the like.

5. A lift-suspended agricultural mower according to claims 1-4, **characterized in that** the carrier arm (2) comprises a joint (2c), the axis of which, when the mower is in its working position, extends substantially in the travelling direction of the mower, and comprises a power means (6) for moving the carrier arm (2) in the joint (2c), whereby the working part (3) of the mower is raised or lowered.

## Patentansprüche

1. Liftaufgehängter landwirtschaftlicher Mäher, wie ein Scheiben- oder Trommelmäher, umfassend einen zur Kopplung mit dem Dreipunktlift eines Traktors vorgesehenen Tragrahmen (1) und einen mit dem Tragrahmen (1) verbundenen Tragarm (2), in welchem in einem Punkt (5) nahe einer vertikalen Ebene ein Arbeitsteil (3) schwenkbar aufgehängt ist, welche Ebene während des Betriebs im wesentlichen in der Fahrrichtung des Mähers verläuft und den Schwerkraftpunkt des Arbeitsteils enthält, und worin eine teleskopische Kardanwelle (20) eine sich am Tragrahmen (1) befindliche Abtriebswelle (18a) mit einer sich am Arbeitsteil (3) befindlichen Eingangswelle (19a) verbindet, **dadurch gekennzeichnet, daß** zur Begrenzung des Abstands zwischen der erwähnten Abtriebswelle (18a) und der Eingangswelle (19a) ein nicht-schubübertragendes Zugelement (24) vorgesehen ist.

2. Liftaufgehängter landwirtschaftlicher Mäher nach Anspruch 1, **dadurch gekennzeichnet, daß** das Zugelement (24) über eine gewisse vorzugsweise einstellbare Länge hinaus nicht ausdehnbar ist.

3. Liftaufgehängter landwirtschaftlicher Mäher nach einem der Ansprüche 1 oder 2, **dadurch gekennzeichnet, daß** das Zugelement (24) am Tragrahmen (1) und dem Arbeitsteil (3) bzw. nahe der Abtriebswelle (18a) und der Eingangswelle (19a) befestigt ist.

4. Liftaufgehängter landwirtschaftlicher Mäher nach den Ansprüchen 1-3, **dadurch gekennzeichnet, daß** das Zugelement (24) eine Schnur, ein Drahtseil, eine Kette, eine teleskopische Stange o.dgl. umfaßt.

5. Liftaufgehängter landwirtschaftlicher Mäher nach den Ansprüchen 1-4, **dadurch gekennzeichnet, daß** der Tragarm (2) ein Gelenk (2c) umfaßt, dessen Achse, wenn sich der Mäher in seiner Arbeitsstellung befindet, im wesentlichen in der Fahrrichtung des Mähers verläuft und Kraftmittel (6) zur Bewegung des Tragarms (2) im Gelenk (2c) umfaßt, wodurch das Arbeitsteil (3) des Mähers gehoben oder gesenkt wird.

## Revendications

1. Faucheuse agricole suspendue à un engin de levage telle qu'une faucheuse à disques ou une faucheuse à tambour, comprenant un châssis de support (1) adapté à être relié à la suspension en trois points d'un tracteur, un bras-support (2) relié au châssis de support (1), bras-support dans lequel un instrument de travail (3) est suspendu à pivotement dans un point (5) près d'un plan vertical qui, lors de fonctionnement, s'étend essentiellement dans la direction de marche de la faucheuse et contient le centre de gravité de l'instrument, et dans lequel un arbre de cardan télescopique (20) lie un arbre de sortie (18a) sur le châssis de support (1) à un arbre d'entrée (19a) sur l'instrument (3), **caractérisée par** un élément de traction (24) qui ne transmet pas la pression pour définir la distance entre ledit arbre de sortie (18a) et ledit arbre d'entrée (19a).

2. Faucheuse agricole suspendue à un engin de levage selon la revendication 1, **caractérisée en ce que** l'élément de traction (24) ne peut pas s'étendre au-delà d'une longueur définie préférablement réglable.

3. Faucheuse agricole suspendue à un engin de levage selon la revendication 1 ou 2, **caractérisée en ce que** l'élément de traction (24) est fixé au châssis de support (1) et à l'instrument (3) respectivement près de l'arbre de sortie (18a) et de l'arbre d'entrée (19a).

4. Faucheuse agricole suspendue à un engin de levage selon les revendications 1-3, **caractérisée en ce que** l'élément de traction (24) comprend un cordon, un fil de fer, une chaîne, une tige télescopique ou un objet semblable.

5. Faucheuse agricole suspendue à un engin de levage selon les revendications 1-4, **caractérisée en ce que** le bras-support (2) comprend un joint (2c), dont l'axe, lorsque la faucheuse est dans sa position de travail, s'étend essentiellement dans la direction de marche de la faucheuse et comprend un moyen de force (6) pour déplacer le bras-support (2) dans le joint (2c), l'instrument (3) de la faucheuse étant levé ou baissé.
